Europäisches Patentamt

(19) European Patent Office

Office européen des brevets

(11) Publication number: **0 024 268**
A1

## (12) EUROPEAN PATENT APPLICATION

(21) Application number: 80850119.1

(22) Date of filing: 08.08.80

(51) Int. Cl.³: **H 02 J 7/02**
H 02 J 7/34, A 01 G 3/04
B 27 B 17/08

(30) Priority: 10.08.79 US 65550

(43) Date of publication of application:
25.02.81 Bulletin 81/8

(84) Designated Contracting States:
DE FR GB NL SE

(71) Applicant: SANDVIK AKTIEBOLAG

S-811 81 Sandviken 1(SE)

(72) Inventor: Jones, John E.
318 Linden Drive
Danville Virginia 24541(US)

(72) Inventor: Laing, Gordon E.
448 Vicar Road
Danville Virginia 24541(US)

(72) Inventor: Crane, Richard A.
121 Vista Court
Danville, Va. 24541(US)

(74) Representative: Forsberg, Lars-Ake et al,
Sandvik Aktiebolag Patents and Licences Fack
S-811 01 Sandviken(SE)

(54) AC/DC source for portable motor driven devices.

(57) Circuitry suitable for powering portable devices such as tools, appliances and the like provides for either battery or AC line operation with no change in configuration. When operating with an AC line supply, device operation and battery charging take place simultaneously at light loads and the battery automatically boosts the AC supply to the device motor when operating at relatively heavy loads.

EP 0 024 268 A1

./...

Croydon Printing Company Ltd.

FIG. 1

AC/DC SOURCE FOR PORTABLE MOTOR DRIVEN DEVICES

This invention relates to circuitry for powering portable, motor driven devices from either a battery or an AC line supply.

Various portable, motor driven devices include circuitry and a battery which enable such devices to be operated either from the battery or from an external AC line supply. Some of such devices utilize an external charging circuit for recharging the battery from an AC line supply whereas other such devices utilize recharging circuitry contained within the device itself and which can be connected to an external AC line supply. With most such devices, the device itself cannot be operated while the battery is being charged. However, it has been known to provide a small, portable, motor driven device which contains both batteries and circuitry enabling the device to be operated from either an AC supply or a battery supply and for the battery to be charged simultaneously with operating the device. A step-down transformer has been used in conjunction with rectifying means and permanent magnet-type DC motors are widely employed in such devices.

Representative prior art illustrating a range of AC/DC circuit configurations of the type described above is to be found in U.S. Patents 3.145.404; 3.535.912; 3.581.480; and 3.623.223.

In the typical prior art device, it will be noted that in addition to the usual on-off switch the prior art circuit will often contain another switch which must be operated to convert the circuit when changing from AC to DC or DC to AC operation. Also, it is typical to provide some type of switch which operates when changing from a charging to discharging mode or discharging to charging mode. Additionally, such devices typically are substantially heavy because of the required weight of the components which weight often in-

2

cludes the weight of a step-down transformer.

With the foregoing comments and prior art in mind an object of the invention is to provide circuitry for a portable, motor operated device adapted for operation either from a self-contained battery supply or from an external AC line supply and with the following characteristics among others:

(a) the ability to operate the device from an AC line supply while charging the battery;

(b) the ability to convert from a battery operation to an AC line supply operation without having to modify the circuit configuration;

(c) the ability to operate on either a battery supply or an AC line supply using a single on-off switch as the sole switch control;

(d) the ability to operate at one level of power based on battery operation and at a higher level of power based on AC line supply operation; and

(e) the use of a single step-down transformer and with no change in circuit configuration as (1) a source of AC power for operation of the device, (2) a source of AC power for recharging the battery through rectifying means, (3) a source of AC power adapted under light loads to both charge the battery and operate the device, and (4) a source of AC power which can be used in conjunction with the battery under relatively heavy load conditions to operate the device with power supplied simultaneously both from the battery and from the AC line supply.

3

The foregoing and other objects will become apparent as the description proceeds.

The circuitry of the invention lends itself to use in small, portable, motor operated devices which for safety, available power or other reasons are required to operate from either a battery supply or from an AC line supply. The invention circuitry is also especially useful in those types of small, portable, motor operated devices adapted to operate with constantly varying load requirements such as in an electric drill, hedge trimmer, grass shear, and the like. The invention circuitry also finds special application in conjunction with small, portable devices which use a permanent magnet-type relatively low voltage DC motor to drive the device, whatever it might be.

Circuitry according to the invention incorporates a stepdown transformer, associated rectifying means, a battery, a single on-off switch and associated line connections. In operation, the device can be operated solely from the battery and the battery periodically charged from the AC line supply. Alternatively, the device can be operated from an AC line supply and under light load charge the battery simultaneously with operating the device and under heavy load use the battery to boost power supplied from the AC line source. All of the features previously set forth as being objects of the invention are achieved.

The circuitry of the invention also enables the device to run at a higher output level under line cord (AC) operation when essentially unlimited input power is available and to run at a lower level of output power under battery operation when economy and battery run time are important.

In the enclosed drawings a preferred embodiment of the invention is disclosed.

Figure 1 is a side view of a hedge trimmer illustrating the type of small motor driven portable device to which the invention circuitry is suited.

Figure 2 is a schematic circuit diagram of the invention circuitry.

Figure 3 is a schematic diagram of the circuit operation under different load conditions.

Figure 4 represents a set of speed, output and current characteristic curves for a 4.8 volt DC permanent magnet motor of a type suited to the invention circuitry.

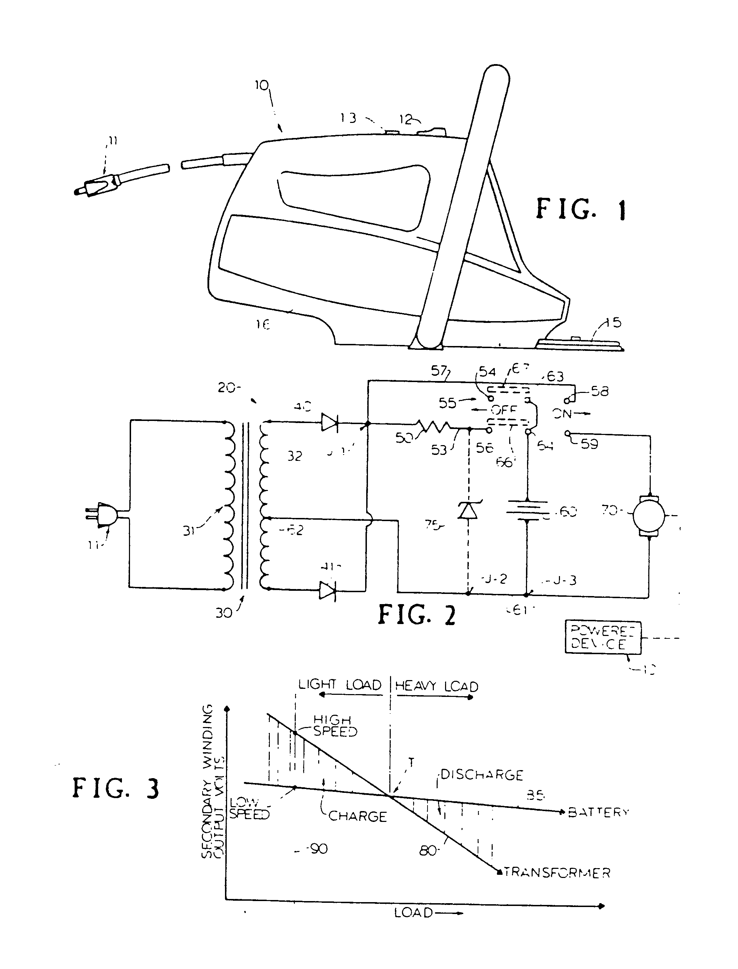

As illustrated by Figure 1, the invention circuitry finds utility in small, portable DC motor driven devices such as the hedge trimmer 10 shown with an AC line supply cord 11, on-off switch 12, safety lock 13, trimmer blades 15 and housing 16 in which the circuitry 20 of the invention is contained. Characteristic of such devices is the fact that the load, e.g. hedge trimming, is constantly varying, is sometimes relatively heavy and is sometimes relatively light. Therefore, the power requirements of such a device are constantly varying. The circuitry 20 of the invention, next to be described in more detail, takes advantage of this operating characteristic when operating on an AC line supply by designing the circuit in such manner that the battery can be charged and the device can operate simultaneously under light load, whereas, under heavy load, the battery power can be used to boost power provided by the AC line supply to operate the device.

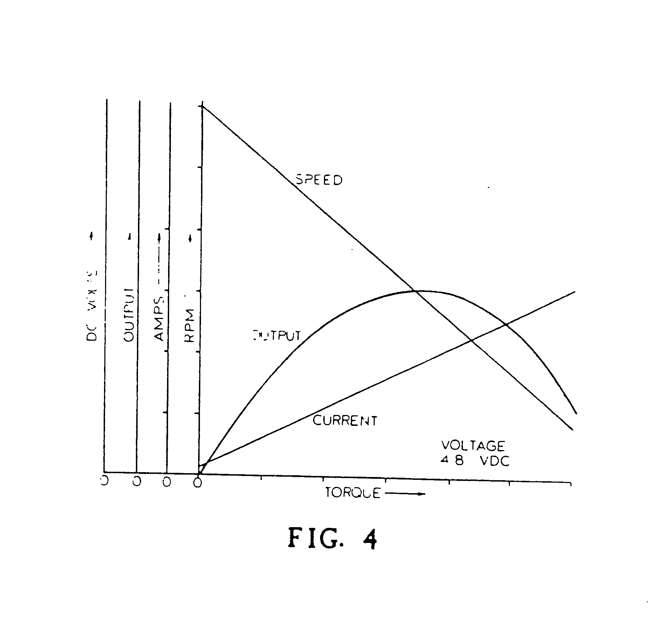

As illustrated in Figure 2, the invention circuitry 20 incorporates the AC line cord 11, a step-down transformer 30 having a center tap, as later referred to, a pair of diodes 40, 41, a current limiting resistor 50, a double-throw,

5

double-pole spring return switch 55, a rechargeable battery 60, a permanent magnet DC motor 70 having characteristic curves such as those illustrated in Figure 4 and, optionally, a zener diode 75 for limiting the charging current after the battery 60 has reached a full state of charge. Use of the zener diode is optional, as stated.

The AC supply provided by the AC line cord 11 is connected across the primary winding 31 of transformer 30. The secondary winding 32 connects at one end to diode 40 and at an opposite end to diode 41 with the outputs of the two diodes connected to a common junction J-1. Junction J-1 in turn connects through current limiting resistor 50 to contact 56 and also through a separate line 57 to contact 58. A connection line 61 is connected at one end to center tap 62 on transformer 30, at an opposite end to motor 70, at an intermediate junction J-2 to one side of the optional zener diode 75 and at another junction J-3 to one side of the battery 60. Center contacts 63, 64 on switch 55 are connected together and also to the opposite side of battery 60. Another switch contact 59 on the same side of switch 55 as contact 58 connects to a side of motor 70 opposite to the side connected to line 61. A fourth contact 54 on switch 55 is a dummy contact and serves no operational purpose. The spring-loaded slide connectors 66, 67 are normally spring biased to the position shown in dotted lines in Figure 2 and designated as the "Off" position.

The circuitry of the invention is adapted to three modes of operation. In one mode of operation the line cord 11 is connected to a suitable AC supply and the switch 55 is in the illustrated "Off" position with slide connector 66 bridging contacts 56 and 64. In this mode, battery 60 is recharged utilizing the rectifying circuitry provided by diodes 40, 41 and current limiting resistor 50 and, optionally, the zener diode 75 to limit the charging current once battery 60 has become fully charged. In this charging mode of operation in which the device 10, whatever it might be, operated by motor 70 is not being operated, the battery 60 is charged in a conventional manner and transformer 30 operates in a conventional manner to provide a reduced voltage across secondary winding 32 which is then rectified by diodes 40, 41 so that a reduced DC charging voltage appears between lines 53 and 61 for charging battery 60.

In another mode of operation, it is intended that the device 10 operated by motor 70 will be operated using battery 60 as the sole source of power and with the line cord 11 disconnected. In this mode, switch 55 is moved to the "On" position so that sliding contact 66 bridges contacts 64 and 59 and which allows battery 60 to operate motor 70 and consequently the selected device 10. Once the job has been accomplished or battery 60 has been depleted in power, circuitry 20 can be operated according to the first described mode, that is, with switch 55 in the "Off" position and line cord 11 connected to an AC line supply to recharge battery 60.

In a third mode, the operational characteristics of transformer 30 become particularly important. In this third mode, it is assumed that the powered device 10 operated by motor 70 will be operated while line cord 11 is connected to an AC supply. For this purpose, transformer 30 is designed to operate with the characteristics illustrated in Figure 3 and in conjunction with a battery supply such as provided by battery 60 and with a permanent magnet-type motor being employed to drive the powered device 10 and with operating motor characteristics such as illustrated in Figure 4. Since transformer design is a well understood art, it will be apparent to skilled transformer designers that operating characteristics such as illustrated by Figure 3 can be obtained by a proper choice of laminations, wire size, secondary and primary impedance, winding resistance, dielectric strength and insulation according to well-known transformer design practices. A flatter battery load curve is also obtainable.

As best illustrated in Figure 3, transformer 30 is designed to provide sufficient output capacity for a preselected range of light to heavy loads which, for example, could be in the nature of hedge trimming, wood drilling, screw driving, or like operations. Further, the transformer is designed with an output characteristic such that the battery is automatically switched from a charge mode to a discharge mode depending on the load conditions as illustrated at the transition point T in Figure 3. This is achieved by designing transformer 30 so that the output characteristic has a predetermined slope as indicated by the selected characteristic curve 80 in Figure 3 and which is designed to operate in conjunction with the characteristic load curve 85 of battery 60 as shown in Figure 3. Thus, as further illustrated by Figure 3, when transformer 30 has such design characteristics, battery 60, when exhibiting a battery voltage less than the transformer voltage, will be charged and when the transformer voltage is less than the battery voltage, then battery 60 will also provide current to motor 70 and, thus, boost the current being supplied from the AC line supply through line cord 11. Since it is known that the slope of the transformer output is a function of the equivalent impedance looking back into the secondary winding of the transformer and is also a function of the type of load (capacitive, inductive, resistive, etc.) connected to the transformer, it will be appreciated that the transformer load characteristic 80 can be readily designed by design techniques known to transformer designers and, thus, the mentioned advantages are readily obtained when operating with relatively flat battery curve 85.

8

A further operating characteristic of the invention circuitry 20 is indicated in Figure 3 by the labels "High
Speed" and "Low Speed" along an arbitrarily selected line
90 representing a relatively light load condition. Thus,
with the indicated slope characteristic 80 and recognizing
the voltage dependent speed characteristic of motor 70, it
will be observed that the selected powered device 10 can be
operated either at a relatively high speed along the transformer load curve 80 under a relatively light load condition
and using AC power as the primary source of power or when
dependent solely on power from battery 60 at a relatively
low speed at a point on the battery load curve 85. Of
course, as indicated in Figure 3, when operating to the
right of the transition point T in Figure 3, and at a selected relatively heavy load, the output speed would necessarily
be obtained using battery 60 as the supplementary source of
power which aids the AC supply to maintain the output speed.
However, what is important to recognize is that devices such
as electric drills, hedge trimmers, screwdrivers, grass trimmers, and the like, operate under constantly varying load
conditions and a majority of the operating time, and in some
instances is as high as 80%, is under free-running or no-
load conditions. Thus, the transformer design of the invention allows the battery to be charged at a controlled rate
established by resistor 50 so as to optimize the number of
battery charge/discharge cycles. Also, when the device is
being used in a remote location or in a location where safety factors are particularly important, the device 10 can be
operated solely from the battery 60 and if this battery
operation follows a period of AC operation, it will also be
recognized that the voltage level of battery 60 will be maintained at a relatively high level, thus insuring a relatively
long period of use dependent solely on battery power.

Additional characteristics of the circuit 20 should be recognized. In particular, it will be noted that circuit 20 operates with a single on-off switch represented by switch
55 and, thus, unlike many prior art AC-DC power circuits
does not require a change in circuit configuration when converting from AC to DC or DC to AC. Further, an important
advantage of the invention circuitry is that circuit 20
eliminates the need for a separate charger since the battery
charging circuitry is provided within circuit 20. The inherent double insulated characteristics of a transformer
isolated low voltage system are also advantageous particularly when operating under hazardous electrical conditions.

From the foregoing description, it will be appreciated that
that the invention circuitry readily adapts to varying line
supply conditions encountered in various countries outside
the United States. Within the United States, it will, of
course, be appreciated that the typical line supply will be
120 volt AC 60 cycle and the typical device drive motor, i.e.,
drive motor 70 will operate within a range of 3 to 10 volts
DC. However, the transformer design and the particular motor
characteristics can be selected to correspond with the particular operating characteristics and the particular available AC supply where the device is being employed. It is
also recognized that a step-down transformer with the characteristics of the disclosed invention could be employed
with rectifying circuitry different from that disclosed and
without departing from the intended scope of the invention.
Also recognized is the fact that while the invention circuitry is deemed to be most useful with portable devices
which encounter a varying load, it will be apparent that the
invention circuitry can also be used with any kind of apparatus which is adapted to operate on a relatively low DC
voltage supply and where the load conditions are substantially constant when the device is being used such as in the
case of DC operated flashlights, DC operated sprayers and
the like. The invention is deemed particularly useful and
is highly advantageous for AC/DC chain saws because of the varying load and frequent need to operate on battery power alone. The dual output powers, i.e., high speed AC and low speed DC, offer an advantage for accommodating to various type loads. The inherent double insulated characteristic of the circuitry, previously mentioned, eliminates the need for a grounded plug and thus offers special advantage where there is frequent interchange between AC and DC operation. Where AC power is available, the supplemental battery power provided by the invention circuitry not only reduces product weight but also offers special advantage for heavy loads as with trimming of relatively heavy limbs.

While the curves indicated in Figure 3 of the drawings are shown as being linear, it should, of course, be appreciated that such curves, as a practical matter, are not necessarily precisely linear. Therefore, it should be understood that some deviation from precisely linear transformer and battery curves can be made while still enjoying the mentioned benefits of the invention.

CLAIMS

1.  A portable, electrically powered device comprising
    (a)  a power consuming unit including an electrical
         apparatus to operated from a DC supply;
    (b)  an apparatus housing mounting said electrical
         apparatus;
    (c)  on-off switch means mounted on said housing and
         accessible to the operator of said device;
    (d)  a step-down transformer in said housing having a
         primary winding connectable to an AC supply and a
         secondary winding, the characteristic curve of said
         secondary winding representing a drop in voltage
         with load;
    (e)  rectifier means connected to said transformer and
         providing from said secondary winding a rectified
         DC output as said DC supply;
    (f)  a rechargeable battery mounted in said housing having
         a relatively flat output versus load curve intersecting said transformer curve at a point intermediate
         the anticipated load range of the device; and
    (g)  circuit connecting and current limiting means enabling
         said switch:
         (i)   when in an "Off" position to connect said battery
               through said rectifier means to said transformer
               secondary winding whereby when said primary
               winding is connected to an AC supply, said battery may be charged by said rectifier means at
               some controlled rate while isolating said electrical apparatus therefrom; and
         (ii)  when in an "On" position to establish one connection between said battery and said electrical
               apparatus and simultaneously another connection
               between said electrical apparatus and said secondary winding through said rectifier means thereby
               enabling said electrical apparatus to be operated

12

directly from said battery or when said primary winding is simultaneously connected to an AC supply enabling said electrical apparatus to be operated within a range of selected relatively light load conditions simultaneously with recharging of said battery and within another range of selected relatively heavy load conditions to be operated utilizing power supplied both from said battery and from said rectifier means and with said ranges of relatively low and heavy load conditions being determined by and dependent upon the slope of said transformer and battery curves and the point of intersection thereof.

2. A device as claimed in claim 1 wherein said electrical apparatus comprises a permanent magnet DC-type motor and said power consuming unit comprises apparatus driven by said motor.

3. A device as claimed in claim 2 wherein said transformer secondary winding includes an intermediate tap, said rectifier means comprises a pair of diodes connected to opposite ends of said secondary winding and said DC output comprises a low voltage DC output developed between a junction joining the output side of said diodes and a line connected to said center tap.

4. A device as claimed in claim 3 wherein said circuit connecting and current limiting means includes a resistor connected between one side of said rectifier means and one side of said battery and effective to limit the charging current during charging of said battery when said switch means is in either said "Off" position or said "On" position.

5. A device as claimed in claim 1 wherein said electrical apparatus comprises a permanent magnet DC-type motor and said power consuming unit comprises apparatus which conventionally operates under varying load conditions.

6. A device as claimed in claim 1 wherein said device comprises a portable handheld device and said transformer, rectifier means, battery and circuit means provide a reduced over-all product weight as compared to the weight that would be required at said heavy load when said device is connected to said AC supply and in the absence of said power being supplied both by said battery and said AC supply.

7. A device as claimed in claim 1 wherein said device comprises a portable handheld device and the slope of said transformer and battery curves adapt said device when under said relatively light load to be operable when connected to said AC supply at a relatively high speed and relatively high available power whereas when operated solely on said battery under said light load being adapted to operate with relatively less power and less speed thereby enabling available battery capacity to be conserved during operation at said light load.

8. A device as claimed in claim 1 wherein said device comprises a portable handheld AC/DC hedge trimming device.

9. A device as claimed in claim 1 wherein said device comprises a portable handheld AC/DC chain saw device.

10. A device as claimed in claim 6, wherein said device comprises a portable handheld device and the slope of said transformer and battery curves adapt said device when under said relatively light load to be operable when connec-

14

ted to said AC supply at a relatively high speed and relatively high available power whereas when operated solely on said battery under said light load being adapted to operate with relatively less power and less speed thereby providing relatively longer running time at said light load.

FIG. 1

FIG. 2

LIGHT LOAD | HEAVY LOAD

FIG. 3

FIG. 4

European Patent Office

**EUROPEAN SEARCH REPORT**

Application number

EP 80 85 0119

| DOCUMENTS CONSIDERED TO BE RELEVANT | | | CLASSIFICATION OF THE APPLICATION (Int. Cl ³) |
|---|---|---|---|
| Category | Citation of document with indication, where appropriate, of relevant passages | Relevant to claim | |
| | <u>US - A - 3 200 319</u> (R.J. TOLMIE) <br> * Column 2, line 40 to column 3, line 67; figure 1 * <br> -- | 1-5 | H 02 J   7/02 <br>                  7/34 <br> A 01 G   3/04 <br> B 27 B 17/08 |
| | <u>US - A - 3 344 899</u> (E.D. WANG et al.) <br> * Column 2, line 62 to column 4, line 17; figures 1,2 * <br> -- | 1,4 | |
| | <u>US - A - 3 512 070</u> (B. FUTTERER et al.) <br> * Column 2, line 70 to column 4, line 22; figures 2,3 * <br> -- | 1,4 | TECHNICAL FIELDS SEARCHED (Int. Cl ³) <br><br> H 02 J   7/20 <br>                  7/00 <br>                  7/34 <br> H 01 M 10/46 <br> A 01 G   3/04 <br> B 27 B 17/08 |
| | <u>FR - A - 2 296 882</u> (HEWLETT-PACKARD) <br> * Page 2, line 30 to page 3, line 38; figure 2 * <br> -- | 1,4 | |
| | <u>FR - A - 2 174 784</u> (CII-ALCATEL) <br> * Page 1, lines 29-40; page 2, line 33 to page 3, line 8; figures 1,4 * <br> -- | 1 | |
| | <u>US - A - 3 443 115</u> (J.W. TIMMERMAN Jr.) <br> * Column 1, line 28 to column 3, line 13; figures 1,2,3 * <br> -- | 1,6 | CATEGORY OF CITED DOCUMENTS <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | <u>US - A - 3 757 194</u> (E.J. WEBER et al.) <br> * Abstract; figures 1,8 * <br> ---- | 8 | &: member of the same patent family, corresponding document |

The present search report has been drawn up for all claims

| Place of search | Date of completion of the search | Examiner |
|---|---|---|
| The Hague | 14-11-1980 | POINT |

EPO Form 1503.1   06.78

BAD ORIGINAL